# EUROPÄISCHE PATENTSCHRIFT

(11) **EP 2 619 819 B1**
(45) Veröffentlichungstag und Bekanntmachung des Hinweises auf die Patenterteilung: **26.02.2020**
(21) Anmeldenummer: 11746536.9
(22) Anmeldetag: 19.08.2011
(51) Int. Cl.: H01M 2/02, H01M 2/10, H01M 10/0525, H01M 10/6551

(54) **GEHÄUSE FÜR GALVANISCHES ELEMENT**
HOUSING FOR A GALVANIC ELEMENT
ENCEINTE POUR ÉLÉMENT GALVANIQUE

(30) Priorität: 21.09.2010 DE 102010041143
(43) Veröffentlichungstag der Anmeldung: 31.07.2013
(73) Patentinhaber: Robert Bosch GmbH, 70442 Stuttgart (DE); Samsung SDI Co., Ltd., Yongin-si Gyeonggi-do 446-577 (KR)
(72) Erfinder: WOEHRLE, Thomas, 80807 Munich (DE); AURACHER, Patrick, 71665 Vaihingen/Enz (DE); PETREVSKI, Aleksandar, 71701 Schwieberdingen (DE); BUBECK, Conrad, 73728 Esslingen (DE)
(74) Vertreter: Bee, Joachim
(86) Internationale Anmeldenummer: PCT/EP2011/064255
(87) Internationale Veröffentlichungsnummer: WO 2012/038160

(56) Entgegenhaltungen:
- EP-A1- 0 944 119
- EP-A1- 2 190 045
- DE-A1- 19 951 753
- US-A- 5 262 251
- US-A- 5 747 192
- US-A1- 2001 049 052

## Beschreibung

Die vorliegende Erfindung betrifft ein Verfahren zur Herstellung eines Gehäuses für ein galvanisches Element sowie ein derartiges Gehäuse und galvanisches Element.

### Stand der Technik

Galvanische Elemente, wie Lithium-Ionen-Zellen, werden je nach Einsatzbereich entweder in weichen Verpackungen, so genannten Softpackages, oder in starren Gehäusen, so genannten Hardcases, integriert, welche unter anderem zur elektrischen Isolation des galvanischen Elements dienen.

Weiche Verpackungen können durch Tiefziehen von Metall-Kunststoff-Verbundwerkstoffen hergestellte werden, welche eine metallische Lage mit einer Schichtdicke von weniger als 50 µm aufweisen. Derartige Materialien werden beispielsweise in der Druckschrift DE 11 2006 001 372 T5 beschrieben.

Aus der US 5,747,192 ist ein einlagiges Etikett zum Etikettieren einer Trockenzellenbatterie mit einem länglichen peripheren Gehäuse, das eine Achse definiert, und mit entgegengesetzten Enden, die einen Gleichstrom und elektrische Energie bereitstellenden Kern einschliessen bekannt. Das Etikett besteht aus einem transparenten, selbsttragenden, im wesentlichen monoaxial ausgerichteten, wärmeschrumpfbaren Polymerfilmträger mit einer Außenfläche und einer Innenfläche, die so breit sind, daß der Träger das Batteriegehäuse umschließt und an entgegengesetzten Enden zuerst und zweite Ränder, die sich parallel zur Achse der Batterie erstrecken und zumindest aneinander anliegen, und eine Länge, um sich über die gegenüberliegenden Enden der Batterie hinaus zu erstrecken und auf die gegenüberliegenden dritten und vierten Enden der Batterie zu überlappen. Eine alkalibeständige, elektrisch nicht leitende, undurchsichtige, pigmentierte Schicht wird auf die Innenfläche des Trägers aufgebracht und von diesem getragen. Über der pigmentierten Schicht wird mindestens entlang der ersten und zweiten Kante eine elektrisch nicht leitende Haftkleberschicht aufgebracht.

Aus der US 5,262,251 ist ein mehrschichtiges Haftetikett bekannt, das auf einer Umfangsfläche eines Körpers, insbesondere einer Trockenbatterie, schrumpffähig ist. Dieses Haftetikett ist mit einer Trägerschicht für einen nach außen sichtbaren Aufdruck versehen, der mit einer transparenten Schutzschicht überzogen ist, deren äußerste Schicht mittels einer axial gereckten, transparenten Verbundfolie aus schrumpfbarem Kunststoff gebildet ist.

Manche Einsatzbereiche, wie der Kraftfahrzeugbereich, erfordern jedoch starre Gehäuse mit einer stärkeren metallischen Gehäusewandung. Diese können nicht durch Tiefziehen von Metall-Kunststoff-Verbundwerkstoffen hergestellt werden, da bei einer größeren Schichtdicke der metallischen Lage die Kunststofflagen an den Kanten überstreckt werden können und reißen können.

Um eine elektrische Isolation von starren Gehäusen zu realisieren, wird üblicherweise ein sogenannter Schrumpfschlauch über die Seitenflächen des Gehäuses gezogen. Der obere und untere Bereich des Gehäuses wird durch den Schrumpfschlauch jedoch nicht abgedeckt und muss durch weitere zusätzliche Prozessschritte mit einer elektrischen Isolation abgedeckt werden. Zudem ist beim Anbringen des Schrumpfschlauches ein gewisser Wärmeeintrag auf die Zelle nicht zu vermeiden.

### Offenbarung der Erfindung

Gegenstand der vorliegenden Erfindung ist ein Verfahren zur Herstellung eines Gehäuses für ein galvanisches mit den Merkmalen des Anspruchs 1, sowie ein Gehäuse mit den Merkmalen des Anspruchs 7.

Das erfindungsgemäße Verfahren ermöglicht die Herstellung von elektrisch isolierten, starren Gehäusen für galvanische Elemente, wie Lithium-Ionen-Zellen, insbesondere für Kraftfahrzeuge, mit einer geringeren Zahl von Prozessschritten. Das Aufkleben hat zudem den Vorteil, dass die Isolationsfolie fest und flächig an dem Gehäuse angebunden werden kann. Auf diese Weise kann zum Einen die Wärmeableitung aus dem Gehäuse- und Zellinneren - verglichen mit der Schrumpfschlauch-Technik - vorteilhafterweise verbessert werden. Zum Anderen wird auf diese Weise die Stoß- und Kratzfestigkeit - verglichen mit aufgeschrumpften Isolationsfolien - verbessert.

Das Formen des Grundgehäuses in Verfahrensschritt a) erfolgt vorzugsweise durch ein Umformverfahren, beispielsweise durch Zugdruckumformen oder Druckumformen, insbesondere durch Tiefziehen oder Durchdrücken, zum Beispiel Fließpressen.

Das Grundgehäuse kann in Verfahrensschritt a) insbesondere aus Aluminium, einer Aluminiumlegierung, Eisen oder einer Eisenlegierung, wie Edelstahl, geformt werden. Insbesondere kann in Verfahrenschritt a) ein Grundgehäuse mit einer Wandstärke von ≥ 100 µm, insbesondere von ≥ 125 µm, beispielsweise von ≥ 150 µm oder ≥ 200 µm oder ≥ 400 µm oder ≥ 650 µm, zum Beispiel von ≥ 100 µm oder ≥ 125 µm oder ≥ 150 µm oder ≥ 200 µm oder ≥ 400 µm oder ≥ 650 µm und/oder bis ≤ 1,5 mm, geformt werden. Zum Beispiel kann in Verfahrensschritt a) ein prismatisches Grundgehäuse, beispielsweise mit mehreren, insbesondere vier, Seitenflächen und einer Bodenfläche, geformt werden.

Im Rahmen des erfindungsgemäßen Verfahrens ist es grundsätzlich möglich den Klebstoff und die Isolationsfolie separat voneinander oder als Schichtsystem aufzutragen.

Erfindungsgemäss weist die in Verfahrensschritt b) eingesetzte Isolationsfolie ein Schichtsystem aus mindestens einer Basisschicht und mindestens einer Klebstoffschicht auf. Eine Isolationsfolie mit Klebstoffschicht kann vorteilhafterweise in Verfahrensschritt b) mit der Klebstoffschicht auf das Grundgehäuse aufgeklebt werden, was eine Vereinfachung des Verfahrens zur Folge hat. Die Basisschicht der in Verfahrensschritt b) eingesetzten Isolationsfolie ist vorzugsweise aus einem Kunststoff ausgebildet. Beispielsweise kann die Basisschicht der in Verfahrensschritt b) eingesetzten Isolationsfolie eine Schichtdicke von ≥ 10 µm, insbesondere von ≥ 12 µm, zum Beispiel von ≥ 10 µm bis ≤ 70 µm, beispielsweise von ≥ 19 µm bis ≤ 25 µm, aufweisen.

Im Rahmen einer weiteren Ausführungsform umfasst die in Verfahrensschritt b) eingesetzte Isolationsfolie mindestens eine Basisschicht aus einem Polymer, welches ausgewählt ist, aus der Gruppe bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Derartige Polymere haben sich als Basisschicht als besonders vorteilhaft erwiesen. Insbesondere kann die mindestens eine Basisschicht der in Verfahrensschritt b) eingesetzten Isolationsfolie aus einem derartigen Polymer ausgebildet sein. Unter dem Begriff ausgebildet kann dabei insbesondere verstanden werden, dass das Polymer Additive, beispielsweise zur Verbesserung der thermischen Leitfähigkeit, umfassen kann. Zum Beispiel kann die mindestens eine Basisschicht beziehungsweise das Polymer der in Verfahrensschritt b) eingesetzten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Zum Beispiel kann die mindestens eine Basisschicht der in Verfahrensschritt b) eingesetzten Isolationsfolie eine Thermosilikonfolie, beispielsweise eine von der Firma Kunze, Deutschland, unter dem Markennamen HEATPAD® vertriebene Thermosilikonfolie, sein.

Grundsätzlich kann in Verfahrensschritt b) sowohl ein Haftklebstoff (Klebstoff ohne Verfestigungsmechanismus) als auch ein chemisch oder physikalisch abbindender Klebstoff, beispielsweise ein Schmelzklebstoff, eingesetzt werden. Vorzugsweise umfasst die in Verfahrensschritt b) eingesetzte Isolationsfolie mindestens eine Klebstoffschicht aus einem Haftklebstoff. So können vorteilhafterweise Wartezeiten und thermische Einflüsse zum Abbinden vermieden werden. Die mindestens eine Klebstoffschicht der in Verfahrensschritt b) eingesetzten Isolationsfolie kann beispielsweise eine Schichtdicke von ≥ 10 µm, insbesondere von ≥ 20 µm, zum Beispiel von ≥ 25 µm bis ≤ 35 µm, aufweisen.

Im Rahmen einer weiteren Ausführungsform umfasst die in Verfahrensschritt b) eingesetzte Isolationsfolie mindestens eine Klebstoffschicht aus einem Klebstoff, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Derartige Klebstoffe haben sich als besonders vorteilhaft erwiesen. Insbesondere kann die mindestens eine Klebstoffschicht der in Verfahrensschritt b) eingesetzten Isolationsfolie aus einem derartigen Klebstoff ausgebildet sein. Unter dem Begriff ausgebildet kann auch dabei insbesondere verstanden werden, dass der Klebstoff Additive, beispielsweise zur Verbesserung der thermischen Leitfähigkeit, umfassen kann. Zum Beispiel kann die mindestens eine Klebstoffschicht der in Verfahrensschritt b) eingesetzten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon.

Überraschenderweise hat sich gezeigt, dass Isolationsfolien mit einer derartigen Basisschicht bereits eine ausreichende elektrische Isolation beziehungsweise eine ausreichend hohe Durchschlagsfestigkeit bereitstellen können und zudem noch funktional in Ihrer Wärmeableitfähigkeit sind.

Die elektrischen Isolationseigenschaften und die Wärmeleitfähigkeit des Gehäuses können jedoch durch zwei oder mehr Basisschichten weiter optimiert werden.

Zum Beispiel kann dafür in Verfahrensschritt b) eine Isolationsfolie eingesetzt werden, welche ein Schichtsystem aus mindestens zwei Basisschichten und mindestens einer Klebstoffschicht, beispielsweise aus mindestens zwei Basisschichten und mindestens zwei Klebstoffschichten, insbesondere in alternierender Anordnung, aufweist. Die Basisschichten und/oder Klebstoffschichten der in Verfahrensschritt b) eingesetzten Isolationsfolie können dabei sowohl gleich als auch unterschiedlich ausgestaltet sein. Dabei können sowohl Basisschichten, Klebstoffschichten, Polymere, Additive und Klebstoffe, welche unterschiedliche Materialbestandteile aufweisen als auch Basisschichten, Klebstoffschichten, Polymere, Additive und Klebstoffe, welche die gleichen Materialbestandteile jedoch eine unterschiedliche, insbesondere prozentuale, Materialbestandteilzusammensetzung aufweisen, als unterschiedlich verstanden werden.

Zum Beispiel kann in Verfahrensschritt b) eine Isolationsfolie eingesetzt werden, welche mindestens eine erste und eine zweite, von der ersten unterschiedliche Basisschicht umfasst. Dabei kann die erste Basisschicht ein erstes Polymer umfassen oder daraus ausgebildet sein und die zweite Basisschicht ein zweites, vom ersten unterschiedliches Polymer umfassen oder daraus ausgebildet sein. Insbesondere kann dabei die erste Basisschicht ein erstes Polymer umfassen oder daraus ausgebildet sein, welches ausgewählt ist aus der Gruppe, bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Die zweite Basisschicht kann dabei insbesondere ein zweites, vom ersten unterschiedliches Polymer umfassen oder daraus ausgebildet sein, welches ebenfalls ausgewählt ist aus der Gruppe bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Unter dem Begriff ausgebildet kann auch dabei insbesondere verstanden werden, dass die Basisschichten beziehungsweise Polymere Additive, beispielsweise zur Verbesserung der thermischen Leitfähigkeit, umfassen können.

Zum Beispiel können die erste und zweite Basisschicht beziehungsweise das erste und zweite Polymer der in Verfahrensschritt b) eingesetzten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Basisschicht beziehungsweise das erste und zweite Polymer sich dadurch unterscheiden, dass diese additiviert, nicht additiviert oder unterschiedlich additiviert sind.

Alternativ oder zusätzlich dazu kann in Verfahrensschritt b) eine Isolationsfolie eingesetzt werden, welche mindestens eine erste und eine zweite, von der ersten unterschiedliche Klebstoffschicht umfasst. Dabei kann die erste Klebstoffschicht einen ersten Klebstoff umfassen oder daraus ausgebildet sein und die zweite Klebstoffschicht einen zweiten, vom ersten unterschiedlichen Klebstoff umfassen oder daraus ausgebildet sein. Insbesondere kann dabei die erste Klebstoffschicht einen ersten Klebstoff umfassen oder daraus ausgebildet sein, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Die zweite Klebstoffschicht kann dabei insbesondere einen zweiten, vom ersten unterschiedlichen Klebstoff umfassen oder daraus ausgebildet sein, welcher ebenfalls ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Unter dem Begriff ausgebildet kann auch dabei insbesondere verstanden werden, dass die Klebstoffschichten beziehungsweise die Klebstoffe Additive, beispielsweise zur Verbesserung der thermischen Leitfähigkeit, umfassen können.

Zum Beispiel können die erste und zweite Klebstoffschicht beziehungsweise der erste und zweite Klebstoff der in Verfahrensschritt b) eingesetzten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Klebstoffschicht beziehungsweise der erste und zweite Klebstoff sich dadurch unterscheiden, dass diese additiviert, nicht additiviert oder unterschiedlich additiviert sind.

Zum Beispiel kann die in Verfahrensschritt b) eingesetzte Isolationsfolie ein Schichtsystem mit einer Polyesterbasisschicht und mit einer Basisschicht aus einem, gegebenenfalls ein Additiv zur Erhöhung der thermischen Leitfähigkeit umfassenden, Silikon und/oder Polyolefin, beispielsweise eine Thermosilikonfolie, zum Beispiel eine von der Firma Kunze, Deutschland, unter dem Markennamen HEATPAD® vertriebene Thermosilikonfolie, umfassen. Darüber hinaus kann das Schichtsystem eine oder zwei Klebstoffschichten umfassen. Die Basisschichten und Klebstoffschichten können dabei alternierend angeordnet sein. Beispielsweise kann die in Verfahrensschritt b) eingesetzte Isolationsfolie eine Klebstoffschicht zum Aufkleben auf das Grundgehäuse aufweisen, welche an eine Basisschicht aus einem gegebenenfalls ein Additiv zur Erhöhung der thermischen Leitfähigkeit umfassenden, Silikon und/oder Polyolefin angrenzt, wobei die Basisschicht aus dem, gegebenenfalls ein Additiv zur Erhöhung der thermischen Leitfähigkeit umfassenden, Silikon und/oder Polyolefin über eine weitere Klebstoffschicht mit einer Polyesterbasisschicht verbunden ist, oder umgekehrt.

Im Rahmen einer weiteren Ausführungsform wird in Verfahrensschritt b) die Isolationsfolie mindestens auf die äußeren Seitenflächen und die äußere Bodenfläche des Grundgehäuses aufgeklebt. Insbesondere kann in Verfahrensschritt b) die Isolationsfolie derart auf die äußeren Seitenflächen und die äußere Bodenfläche des Grundgehäuses aufgeklebt werden, dass die Isolationsfolie diese Flächen teilweise oder vollständig, insbesondere vollständig, bedeckt. Vorzugsweise wird in Verfahrensschritt b) die Isolationsfolie derart auf die äußeren Seitenflächen und die äußere Bodenfläche des Grundgehäuses aufgeklebt, dass die Abschnitte der Isolationsfolie miteinander nicht oder nur geringfügig, das heißt wie zur Isolation notwendig, überlappen. Auf diese Weise kann der Raumbedarf vorteilhafterweise minimiert werden.

Im Rahmen einer weiteren Ausführungsform ist die in Verfahrensschritt b) eingesetzte Isolationsfolie in einer Form strukturiert, welche zumindest einer Auffaltung der planaren Bereiche der äußeren Seitenflächen und der äußeren Bodenfläche des Grundgehäuses (in einer Ebene), insbesondere ähnlich einem unvollständigen geometrischen Netz des Grundgehäuses, entspricht. Insbesondere kann die in Verfahrensschritt b) eingesetzte Isolationsfolie in einer Form strukturiert sein, welche zumindest einer Auffaltung der planaren Bereiche der äußeren Seitenflächen und der äußeren Bodenfläche des Grundgehäuses sowie der dazwischen liegenden gewölbten Außenflächen (in einer Ebene) entspricht.

Weiterhin kann die Form der in Verfahrensschritt b) eingesetzten Isolationsfolie eine Auffaltung zumindest eines Teilbereiches der äußeren Deckfläche des Grundgehäuses umfassen. In diesem Abschnitt kann die in Verfahrensschritt b) eingesetzte Isolationsfolie zusätzlich, beispielsweise für die Pole des galvanischen Elements, ausgespart sein. Beispielsweise kann im Rahmen dieser Ausführungsform nach dem Verfahrensschritt a) und vor oder während Verfahrensschritt b) und des später erläuterten Verfahrensschritts c) das Grundgehäuse mit den elektrochemischen Bauteilen des herzustellenden galvanischen Elements bestückt, gegebenenfalls das Grundgehäuse mit einer Deckplatte verschlossen, und anschließend dieser Abschnitt auf beziehungsweise über die Deckfläche des Grundgehäuses geklebt werden.

Vorzugsweise ist die in Verfahrensschritt b) eingesetzte Isolationsfolie derart in einer Form strukturiert, dass deren Abschnitte nach dem Aufkleben auf das Grundgehäuse miteinander nicht oder nur geringfügig, das heißt wie zur Isolation notwendig, überlappen. Wie bereits erläutert, hat dies den Vorteil, dass der Raumbedarf des Gehäuses minimiert werden.

Die elektrischen Isolationseigenschaften und die Wärmeleitfähigkeit des Gehäuses können dadurch weiter optimiert werden, dass auf die in bereits in Verfahrensschritt b) aufgeklebte Isolationsfolie in einem weiteren Verfahrensschritt c) eine weitere Isolationsfolie aufgeklebt wird.

Im Rahmen der Erfindung ist daher vorgesehen, dass das Verfahren nach dem Verfahrensschritt b) weiterhin mindestens einen Verfahrensschritt c): Aufkleben einer weiteren Isolationsfolie auf die zuvor, beispielsweise in Verfahrensschritt b) oder einem vorangehenden Verfahrensschritt c), aufgeklebte Isolationsfolie, umfasst.

Im Rahmen einer weiteren Ausführungsform weist die in Verfahrensschritt c) eingesetzte Isolationsfolie ein Schichtsystem aus mindestens einer Basisschicht und mindestens einer Klebstoffschicht auf. Die weitere Isolationsfolie kann vorteilhafterweise in Verfahrensschritt c) mit einer Klebstoffschicht auf die zuvor aufgeklebte Isolationsfolie aufgeklebt werden, was eine Vereinfachung des Verfahrens zur Folge hat. Auch die Basisschicht der in Verfahrensschritt c) eingesetzten Isolationsfolie ist vorzugsweise aus einem Kunststoff ausgebildet. Beispielsweise kann die Basisschicht der in Verfahrensschritt c) eingesetzten Isolationsfolie eine Schichtdicke von ≥ 10 µm, insbesondere von ≥ 12 µm, zum Beispiel von ≥ 10 µm bis ≤ 70 µm, beispielsweise von ≥ 19 µm bis ≤ 25 µm, aufweisen.

Im Rahmen einer weiteren Ausführungsform umfasst die in Verfahrensschritt c) eingesetzte Isolationsfolie mindestens eine Basisschicht aus einem Polymer, welches ausgewählt ist, aus der Gruppe bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Derartige Polymere haben sich als Basisschicht als besonders vorteilhaft erwiesen. Insbesondere kann die mindestens eine Basisschicht der in Verfahrensschritt c) eingesetzten Isolationsfolie aus einem derartigen Polymer ausgebildet sein. Unter dem Begriff ausgebildet kann auch dabei insbesondere verstanden werden, dass das Polymer Additive, beispielsweise zur Verbesserung der thermischen Leitfähigkeit, umfassen kann. Zum Beispiel kann die mindestens eine Basisschicht beziehungsweise das Polymer der in Verfahrensschritt c) eingesetzten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Zum Beispiel kann die mindestens eine Basisschicht der in Verfahrensschritt c) eingesetzten Isolationsfolie eine Thermosilikonfolie, beispielsweise eine von der Firma Kunze, Deutschland, unter dem Markennamen HEATPAD® vertriebene Thermosilikonfolie, sein.

Grundsätzlich kann in Verfahrensschritt c) sowohl ein Haftklebstoff als auch ein chemisch oder physikalisch abbindender Klebstoff, beispielsweise ein Schmelzklebstoff, eingesetzt werden. Vorzugsweise umfasst die in Verfahrensschritt c) eingesetzte Isolationsfolie mindestens eine Klebstoffschicht aus einem Haftklebstoff. So können vorteilhafterweise Wartezeiten und thermische Einflüsse zum Abbinden vermieden werden. Die mindestens eine Klebstoffschicht der in Verfahrensschritt c) eingesetzten Isolationsfolie kann beispielsweise eine Schichtdicke von ≥ 10 µm, insbesondere von ≥ 20 µm, zum Beispiel von ≥ 25 µm bis ≤ 35 µm, aufweisen.

Im Rahmen einer weiteren Ausführungsform umfasst die in Verfahrensschritt c) eingesetzte Isolationsfolie mindestens eine Klebstoffschicht aus einem Klebstoff, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Derartige Klebstoffe haben sich als besonders vorteilhaft erwiesen. Insbesondere kann die mindestens eine Klebstoffschicht der in Verfahrensschritt c) eingesetzten Isolationsfolie aus einem derartigen Klebstoff ausgebildet sein. Unter dem Begriff ausgebildet kann auch dabei insbesondere verstanden werden, dass der Klebstoff Additive, beispielsweise zur Verbesserung der thermischen Leitfähigkeit, umfassen kann. Zum Beispiel kann die mindestens eine Klebstoffschicht der in Verfahrensschritt c) eingesetzten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon.

Die in Verfahrensschritt c) eingesetzte Isolationsfolie kann insbesondere eine derartige Basisschicht aufweisen. Beispielsweise kann in Verfahrensschritt b) eine Isolationsfolie mit einem Schichtsystem aus einer Basisschicht und einer Klebstoffschicht auf das Grundgehäuse aufgeklebt werden, auf welche dann in Verfahrensschritt c) eine weitere Isolationsfolie mit einem Schichtsystem aus einer Basisschicht und einer Klebstoffschicht aufgeklebt wird. Dabei können die Klebstoffschichten und Basisschichten der in Verfahrensschritt b) und c) eingesetzten Isolationsfolien sowohl gleich als auch unterschiedlich sein. Auch hierbei können sowohl Basisschichten beziehungsweise Klebstoffschichten, welche unterschiedliche Materialbestandteile aufweisen als auch Basisschichten beziehungsweise Klebstoffschichten, welche die gleichen Materialbestandteile jedoch eine unterschiedliche, insbesondere prozentuale, Materialbestandteilzusammensetzung aufweisen, als unterschiedlich verstanden werden. Zum Beispiel kann in Verfahrensschritt b) eine Isolationsfolie mit einem Schichtsystem aus einer Basisschicht aus einem, gegebenenfalls ein Additiv zur Erhöhung der thermischen Leitfähigkeit umfassenden, Silikon und/oder Polyolefin, beispielsweise eine Thermosilikonfolie, zum Beispiel eine von der Firma Kunze, Deutschland, unter dem Markennamen HEATPAD® vertriebene Thermosilikonfolie, und einer Klebstoffschicht auf das Grundgehäuse aufgeklebt werden, auf welche dann in Verfahrensschritt c) eine weitere Isolationsfolie mit einem Schichtsystem aus einer Polyesterbasisschicht und einer Klebstoffschicht aufgeklebt wird, oder umgekehrt.

Es ist auch möglich in Verfahrensschritt c) eine Isolationsfolie einzusetzen beziehungsweise aufzukleben, welche ein Schichtsystem aus mindestens zwei Basisschichten und mindestens einer Klebstoffschicht, beispielsweise aus mindestens zwei Basisschichten und mindestens zwei Klebstoffschichten, insbesondere in alternierender Anordnung, aufweist. Die Basisschichten und/oder Klebstoffschichten der in Verfahrensschritt c) eingesetzten Isolationsfolie können dabei ebenfalls sowohl gleich als auch unterschiedlich ausgestaltet sein. Auch hierbei können sowohl Basisschichten, Klebstoffschichten, Polymere, Additive und Klebstoffe, welche unterschiedliche Materialbestandteile aufweisen als auch Basisschichten, Klebstoffschichten, Polymere, Additive und Klebstoffe, welche die gleichen Materialbestandteile jedoch eine unterschiedliche, insbesondere prozentuale, Materialbestandteilzusammensetzung aufweisen, als unterschiedlich verstanden werden.

Zum Beispiel kann in Verfahrensschritt c) eine Isolationsfolie eingesetzt werden, welche mindestens eine erste und eine zweite, von der ersten unterschiedliche Basisschicht umfasst. Dabei kann die erste Basisschicht ein erstes Polymer umfassen oder daraus ausgebildet sein und die zweite Basisschicht ein zweites, vom ersten unterschiedliches Polymer umfassen oder daraus ausgebildet sein. Insbesondere kann dabei die erste Basisschicht ein erstes Polymer umfassen oder daraus ausgebildet sein, welches ausgewählt ist aus der Gruppe, bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Die zweite Basisschicht kann dabei insbesondere ein zweites, vom ersten unterschiedliches Polymer umfassen oder daraus ausgebildet sein, welches ebenfalls ausgewählt ist aus der Gruppe bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Unter dem Begriff ausgebildet kann auch dabei insbesondere verstanden werden, dass die Basisschichten beziehungsweise Polymere Additive, beispielsweise zur Verbesserung der thermischen Leitfähigkeit, umfassen können.

Zum Beispiel können die erste und zweite Basisschicht beziehungsweise das erste und zweite Polymer der in Verfahrensschritt c) eingesetzten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Basisschicht beziehungsweise das erste und zweite Polymer sich dadurch unterscheiden, dass diese additiviert, nicht additiviert oder unterschiedlich additiviert sind.

Alternativ oder zusätzlich dazu kann in Verfahrensschritt c) eine Isolationsfolie eingesetzt werden, welche mindestens eine erste und eine zweite, von der ersten unterschiedliche Klebstoffschicht umfasst. Dabei kann die erste Klebstoffschicht einen ersten Klebstoff umfassen oder daraus ausgebildet sein und die zweite Klebstoffschicht einen zweiten, vom ersten unterschiedlichen Klebstoff umfassen oder daraus ausgebildet sein. Insbesondere kann dabei die erste Klebstoffschicht einen ersten Klebstoff umfassen oder daraus ausgebildet sein, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Die zweite Klebstoffschicht kann dabei insbesondere einen zweiten, vom ersten unterschiedlichen Klebstoff umfassen oder daraus ausgebildet sein, welcher ebenfalls ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Unter dem Begriff ausgebildet kann auch dabei insbesondere verstanden werden, dass die Klebstoffschichten beziehungsweise die Klebstoffe Additive, beispielsweise zur Verbesserung der thermischen Leitfähigkeit, umfassen können.

Zum Beispiel können die erste und zweite Klebstoffschicht beziehungsweise der erste und zweite Klebstoff der in Verfahrensschritt c) eingesetzten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Klebstoffschicht beziehungsweise der erste und zweite Klebstoff sich dadurch unterscheiden, dass diese additiviert, nicht additiviert oder unterschiedlich additiviert sind.

Vorzugsweise wird in Verfahrensschritt c) die weitere Isolationsfolie mindestens auf die äußeren Seitenflächen und die äußere Bodenfläche der zuvor, beispielsweise in Verfahrensschritt b) oder einem vorangehenden Verfahrensschritt c), aufgeklebten Isolationsfolie aufgeklebt. Insbesondere kann in Verfahrensschritt c) die weitere Isolationsfolie derart auf die äußeren Seitenflächen und die äußere Bodenfläche der zuvor aufgeklebten Isolationsfolie aufgeklebt werden, dass die weitere Isolationsfolie diese Flächen teilweise oder vollständig, insbesondere vollständig, bedeckt. Vorzugsweise wird in Verfahrensschritt c) die weitere Isolationsfolie derart auf die äußeren Seitenflächen und die äußere Bodenfläche der zuvor aufgeklebten Isolationsfolie aufgeklebt, dass die Abschnitte der weiteren Isolationsfolie miteinander nicht oder nur geringfügig, das heißt wie zur Isolation notwendig, überlappen. Auf diese Weise kann der Raumbedarf vorteilhafterweise minimiert werden.

Vorzugsweise ist die in Verfahrensschritt c) eingesetzte Isolationsfolie in einer Form strukturiert, welche zumindest einer Auffaltung der planaren Bereiche der äußeren Seitenflächen und der äußeren Bodenfläche des Isolationsfolien beklebten Grundgehäuses (aus Verfahrensschritt b)) (in einer Ebene), insbesondere ähnlich einem unvollständigen geometrischen Netz des Isolationsfolien beklebten Grundgehäuses, entspricht. Insbesondere kann die in Verfahrensschritt c) eingesetzte Isolationsfolie in einer Form strukturiert sein, welche zumindest einer Auffaltung der planaren Bereiche der äußeren Seitenflächen und der äußeren Bodenfläche des Isolationsfolien beklebten Grundgehäuses sowie der dazwischen liegenden gewölbten Außenflächen (in einer Ebene) entspricht.

Weiterhin kann die Form der in Verfahrensschritt c) eingesetzten Isolationsfolie eine Auffaltung zumindest eines Teilbereiches der äußeren Deckfläche des Isolationsfolien beklebten Grundgehäuses umfassen. In diesem Abschnitt kann die in Verfahrensschritt c) eingesetzte Isolationsfolie zusätzlich, beispielsweise für die Pole des galvanischen Elements, ausgespart sein. Beispielsweise kann im Rahmen dieser Ausführungsform nach dem Verfahrensschritt a) und vor oder während Verfahrensschritt b) oder c) das Grundgehäuse mit den elektrochemischen Bauteilen des herzustellenden galvanischen Elements bestückt, gegebenenfalls das Grundgehäuse mit einer Deckplatte verschlossen, und anschließend dieser Abschnitt auf beziehungsweise über die Deckfläche des Grundgehäuses geklebt werden.

Vorzugsweise ist die in Verfahrensschritt c) eingesetzte Isolationsfolie derart in einer Form strukturiert, dass deren Abschnitte nach dem Aufkleben auf die zuvor aufgeklebte Isolationsfolie miteinander nicht oder nur geringfügig, das heißt wie zur Isolation notwendig, überlappen. Wie bereits erläutert, hat dies den Vorteil, dass der Raumbedarf des Gehäuses minimiert werden.

Insbesondere können die in Verfahrensschritt a) und c) eingesetzten Isolationsfolien in unterschiedlichen Formen strukturiert sein, welche jeweils unterschiedlichen Auffaltungen entsprechen. Auf diese Weise können Fügeschlitze, welche gegebenenfalls nach dem Aufkleben der Isolationsfolie in Verfahrensschritt b) auftreten können durch das Aufkleben der weiteren, in Form einer andersartigen Auffaltung strukturierten Isolationsfolie geschlossen werden. So können wiederum vorteilhafterweise die elektrisch isolierenden Eigenschaften des Gehäuses weiter verbessert werden.

Das Strukturieren der in Verfahrensschritt a) und gegebenenfalls c) eingesetzten Isolationsfolien kann beispielsweise durch Stanzen erfolgen.

Vorzugsweise wird Isolationsfolie in Verfahrensschritt a) und gegebenenfalls c) auf einer Trägerfolie, insbesondere auf einem Trägerfolienband mit einer Vielzahl von strukturierten, beispielsweise gestanzten, Isolationsfolien, bereitgestellt. Insbesondere kann dabei die Klebstoffschicht der Isolationsfolie mit der Trägerfolie verbunden sein. Beispielsweise kann die Trägerfolie beziehungsweise das Trägerfolienband eine Schichtdicke von ≥ 20 µm, insbesondere von ≥ 40 µm, aufweisen.

Im Rahmen einer weiteren Ausführungsform wird in Verfahrensschritt b) und/oder gegebenenfalls c) die Isolationsfolie von einer Trägerfolie, insbesondere einem Trägerfolienband, aus, insbesondere automatisch, aufgeklebt. Auf diese Weise kann das Verfahren vorteilhafterweise weiter vereinfacht werden. Die Isolationsfolie kann dabei vor oder während des Verfahrensschritts b) beziehungsweise c) von der Trägerfolie abgezogen werden. Insbesondere kann die Isolationsfolie in Verfahrensschritt a) beziehungsweise c) in einem Arbeitsschritt, insbesondere automatisch, von der Trägerfolie abgezogen und aufgeklebt werden.

Während oder nach dem Verfahrensschritt b) und/oder gegebenenfalls c) kann ein Druck auf die Isolationsfolie, insbesondere flächig, ausgeübt werden beziehungsweise die Isolationsfolie kann an das Grundgehäuse, insbesondere flächig, angepresst werden. Alternativ oder zusätzlich dazu kann während oder nach dem Verfahrensschritt b) und/oder gegebenenfalls c) die Isolationsfolie, insbesondere flächig, erwärmt werden. In beiden Fällen kann sich dabei die Schichtdicke der Isolationsfolie verringern. Insbesondere kann sich die Schichtdicke der Klebstoffschicht/en, beispielsweise um bis zu 25 %, zum Beispiel um bis zu 15 %, der ursprünglichen Schichtdicke, verringern. Dadurch kann vorteilhafterweise die Energiedichte der Zelle, insbesondere verglichen mit einer aufgeschrumpften Isolationsfolie, erhöht werden. Die Schichtdicke der Basisschicht/en kann dabei unverändert bleiben.

Die in Verfahrensschritt a) und/oder c) eingesetzten Isolationsfolien können insbesondere eine Wärmeleitfähigkeit von ≥ 0,10 W/(mK), beispielsweise von ≥ 0,15 W/(mK), und/oder eine einer Durchschlagsfestigkeit von ≥ 2 kV aufweisen.

Vor, während oder nach Verfahrensschritt b) beziehungsweise c) kann das Grundgehäuse mit elektrochemischen Bauteilen eines galvanischen Elements bestückt und gegebenenfalls mit einer Deckplatte verschlossen werden. Daher kann das erfindungsgemäße Verfahren auch im Rahmen eines Verfahrens zur Herstellung eines galvanischen Elements eingesetzt werden.

Hinsichtlich weiterer Merkmale und Vorteile des erfindungsgemäßen Verfahrens wird hiermit explizit auf die Erläuterungen im Zusammenhang mit dem erfindungsgemäßen Gehäuse, galvanischen Element, Modul und Pack sowie mit der Figurenbeschreibung verwiesen.

Ein weiterer Gegenstand der vorliegenden Erfindung ist ein Gehäuse für ein galvanisches Element, insbesondere eine Lithium-Ionen-Zelle, welches ein metallisches Grundgehäuse mit einer Wandstärke von ≥ 100 µm, eine auf mindestens eine Außenfläche des Grundgehäuses aufgeklebte Isolationsfolie und eine weitere Isolationsfolie, welche auf die auf das Grundgehäuse aufgeklebte Isolationsfolie aufgeklebt ist, umfasst und/oder welches durch ein erfindungsgemäßes Verfahren hergestellt ist.

Das metallische Grundgehäuse kann beispielsweise eine Wandstärke von ≥ 125 µm, beispielsweise von ≥ 150 µm oder ≥ 200 µm oder ≥ 400 µm oder ≥ 650 µm, zum Beispiel von ≥ 100 µm oder ≥ 125 µm oder ≥ 150 µm oder ≥ 200 µm oder ≥ 400 µm oder ≥ 650 µm und/oder bis ≤ 1,5 mm, aufweisen und/oder durch ein Umformverfahren, beispielsweise durch Zugdruckumformen oder Druckumformen, insbesondere durch Tiefziehen oder Durchdrücken, zum Beispiel Fließpressen, ausgebildet sein.

Insbesondere kann das Grundgehäuse aus Aluminium, einer Aluminiumlegierung, Eisen oder einer Eisenlegierung, wie Edelstahl, ausgebildet sein. Zum Beispiel kann das Grundgehäuse ein prismatisches Gehäuse, beispielsweise mit mehreren, insbesondere vier, Seitenflächen und einer Bodenfläche, sein. Darüber hinaus kann das Grundgehäuse elektrochemische Bauteile und/oder eine Deckplatte aufweisen.

Die Isolationsfolie/en können grundsätzlich sowohl mit einem Haftklebstoff (Klebstoff ohne Verfestigungsmechanismus) als auch mit einem chemisch oder einem physikalisch abbindenden Klebstoff, beispielsweise einem Schmelzklebstoff, aufgeklebt sein.

Im Rahmen einer bevorzugten Ausführungsform weist die auf das Grundgehäuse aufgeklebte Isolationsfolie ein Schichtsystem aus mindestens einer Basisschicht und mindestens einer Klebstoffschicht auf. Insbesondere kann dabei die Isolationsfolie mit der Klebstoffschicht auf das Grundgehäuse aufgeklebt sein. Die Basisschicht der auf das Grundgehäuse aufgeklebten Isolationsfolie ist vorzugsweise aus einem Kunststoff ausgebildet. Beispielsweise kann die Basisschicht der auf das Grundgehäuse aufgeklebten Isolationsfolie eine Schichtdicke von ≥ 10 µm, insbesondere von ≥ 12 µm, zum Beispiel von ≥ 10 µm bis ≤ 70 µm, beispielsweise von ≥ 19 µm bis ≤ 25 µm, aufweisen.

Im Rahmen einer weiteren Ausführungsform umfasst die auf das Grundgehäuse aufgeklebte Isolationsfolie mindestens eine Basisschicht aus einem Polymer, welches ausgewählt ist, aus der Gruppe bestehend aus Polyestern, beispielsweise Polyethylenterephthalat (PET) und/oder Polyethylennaphthalat (PEN), Silikonen, Polyolefinen, beispielsweise Polypropylen (PP), Polyhalogenolefinen, beispielsweise Polyvinylchlorid (PVC), Polystyrolen (PS), Polyimiden (PI) und Kombinationen davon. Insbesondere kann die mindestens eine Basisschicht der auf das Grundgehäuse aufgeklebten Isolationsfolie aus einem derartigen Polymer ausgebildet sein. Zum Beispiel kann die mindestens eine Basisschicht beziehungsweise das Polymer der auf das Grundgehäuse aufgeklebten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Zum Beispiel kann die mindestens eine Basisschicht der auf das Grundgehäuse aufgeklebten Isolationsfolie eine Thermosilikonfolie, beispielsweise eine von der Firma Kunze, Deutschland, unter dem Markennamen HEATPAD® vertriebene Thermosilikonfolie, sein.

Vorzugsweise umfasst die auf das Grundgehäuse aufgeklebte Isolationsfolie mindestens eine Klebstoffschicht aus einem Haftklebstoff. Die mindestens eine Klebstoffschicht der auf das Grundgehäuse aufgeklebten Isolationsfolie kann beispielsweise eine Schichtdicke von ≥ 10 µm, insbesondere von ≥ 20 µm, zum Beispiel von ≥ 25 µm bis ≤ 35 µm, aufweisen.

Im Rahmen einer weiteren Ausführungsform umfasst die auf das Grundgehäuse aufgeklebte Isolationsfolie mindestens eine Klebstoffschicht aus einem Klebstoff, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Insbesondere kann die mindestens eine Klebstoffschicht der auf das Grundgehäuse aufgeklebten Isolationsfolie aus einem derartigen Klebstoff ausgebildet sein. Zum Beispiel kann die mindestens eine Klebstoffschicht der auf das Grundgehäuse aufgeklebten Isolationsfolie mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon.

Vorzugsweise weist die auf das Grundgehäuse aufgeklebte Isolationsfolie ein Schichtsystem aus mindestens zwei Basisschichten und mindestens einer Klebstoffschicht, beispielsweise aus mindestens zwei Basisschichten und mindestens zwei Klebstoffschichten, insbesondere in alternierender Anordnung, auf. Die Basisschichten und/oder Klebstoffschichten der auf das Grundgehäuse aufgeklebten Isolationsfolie können dabei sowohl gleich als auch unterschiedlich ausgestaltet sein.

Zum Beispiel kann die auf das Grundgehäuse aufgeklebte Isolationsfolie mindestens eine erste und eine zweite, von der ersten unterschiedliche Basisschicht umfassen. Dabei kann die erste Basisschicht ein erstes Polymer umfassen oder daraus ausgebildet sein und die zweite Basisschicht ein zweites, vom ersten unterschiedliches Polymer umfassen oder daraus ausgebildet sein. Insbesondere kann dabei die erste Basisschicht ein erstes Polymer umfassen oder daraus ausgebildet sein, welches ausgewählt ist aus der Gruppe, bestehend aus Polyestern, Silikonen, Polyolefinen, Polyhalogenolefinen, Polystyrolen, Polyimiden und Kombinationen davon. Die zweite Basisschicht kann dabei insbesondere ein zweites, vom ersten unterschiedliches Polymer umfassen oder daraus ausgebildet sein, welches ebenfalls ausgewählt ist aus der Gruppe bestehend aus Polyestern, Silikonen, Polyolefinen, Polyhalogenolefinen, Polystyrolen, Polyimiden und Kombinationen davon. Dabei können die erste und zweite Basisschicht beziehungsweise das erste und zweite Polymer der auf das Grundgehäuse aufgeklebten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Basisschicht beziehungsweise das erste und zweite Polymer sich dadurch unterscheiden, dass diese additiviert, nicht additiviert oder unterschiedlich additiviert sind.

Alternativ oder zusätzlich dazu kann die auf das Grundgehäuse aufgeklebte Isolationsfolie mindestens eine erste und eine zweite, von der ersten unterschiedliche Klebstoffschicht umfassen. Dabei kann die erste Klebstoffschicht einen ersten Klebstoff umfassen oder daraus ausgebildet sein und die zweite Klebstoffschicht einen zweiten, vom ersten unterschiedlichen Klebstoff umfassen oder daraus ausgebildet sein. Insbesondere kann dabei die erste Klebstoffschicht einen ersten Klebstoff umfassen oder daraus ausgebildet sein, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Die zweite Klebstoffschicht kann dabei insbesondere einen zweiten, vom ersten unterschiedlichen Klebstoff umfassen oder daraus ausgebildet sein, welcher ebenfalls ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Dabei können die erste und zweite Klebstoffschicht beziehungsweise der erste und zweite Klebstoff der auf das Grundgehäuse aufgeklebten Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Klebstoffschicht beziehungsweise der erste und zweite Klebstoff sich dadurch unterscheiden, dass diese additiviert, nicht additiviert oder unterschiedlich additiviert sind.

Zum Beispiel kann die auf das Grundgehäuse aufgeklebte Isolationsfolie ein Schichtsystem mit einer Polyesterbasisschicht und mit einer Basisschicht aus einem, gegebenenfalls ein Additiv zur Erhöhung der thermischen Leitfähigkeit umfassenden, Silikon und/oder Polyolefin, beispielsweise eine Thermosilikonfolie, zum Beispiel eine von der Firma Kunze, Deutschland, unter dem Markennamen HEATPAD® vertriebene Thermosilikonfolie, umfassen. Darüber hinaus kann das Schichtsystem eine oder zwei Klebstoffschichten umfassen. Die Basisschichten und Klebstoffschichten können dabei alternierend angeordnet sein. Beispielsweise kann die auf das Grundgehäuse aufgeklebte Isolationsfolie eine an das Grundgehäuse angrenzende Klebstoffschicht aufweisen, welche an eine Basisschicht aus einem gegebenenfalls ein Additiv zur Erhöhung der thermischen Leitfähigkeit umfassenden, Silikon und/oder Polyolefin angrenzt, wobei die Basisschicht aus dem, gegebenenfalls ein Additiv zur Erhöhung der thermischen Leitfähigkeit umfassenden, Silikon und/oder Polyolefin über eine weitere Klebstoffschicht mit einer Polyesterbasisschicht verbunden ist, oder umgekehrt.

Vorzugsweise ist die Isolationsfolie mindestens auf die äußeren Seitenflächen und die äußere Bodenfläche des Grundgehäuses aufgeklebt. Insbesondere kann die Isolationsfolie derart auf die äußeren Seitenflächen und die äußere Bodenfläche des Grundgehäuses aufgeklebt sein, dass die Isolationsfolie diese Flächen teilweise oder vollständig, insbesondere vollständig, bedeckt. Vorzugsweise ist die Isolationsfolie derart auf die äußeren Seitenflächen und die äußere Bodenfläche des Grundgehäuses aufgeklebt, dass die Abschnitte der Isolationsfolie miteinander nicht oder nur geringfügig, das heißt wie zur Isolation notwendig, überlappen.

Im Rahmen einer weiteren Ausführungsform ist die auf das Grundgehäuse aufgeklebte Isolationsfolie in einer Form strukturiert, welche zumindest einer Auffaltung der planaren Bereiche der äußeren Seitenflächen und der äußeren Bodenfläche des Grundgehäuses (in einer Ebene), insbesondere ähnlich einem unvollständigen geometrischen Netz des Grundgehäuses, entspricht. Insbesondere kann die auf das Grundgehäuse aufgeklebte Isolationsfolie in einer Form strukturiert sein, welche zumindest einer Auffaltung der planaren Bereiche der äußeren Seitenflächen und der äußeren Bodenfläche des Grundgehäuses sowie der dazwischen liegenden gewölbten Außenflächen (in einer Ebene) entspricht.

Vorzugsweise umfasst die Form der auf das Grundgehäuse aufgeklebten Isolationsfolie weiterhin eine Auffaltung zumindest eines Teilbereiches der äußeren Deckfläche des Grundgehäuses. In diesem Abschnitt kann die auf das Grundgehäuse aufgeklebte Isolationsfolie zusätzlich, beispielsweise für die Pole des galvanischen Elements, ausgespart sein. Beispielsweise kann im Rahmen dieser Ausführungsform die Deckfläche des Grundgehäuses mit diesem Abschnitt dieser Isolationsfolie beklebt sein.

Vorzugsweise überlappen die Abschnitte der auf das Grundgehäuse aufgeklebten Isolationsfolie miteinander nicht oder nur geringfügig.

Im Rahmen der Erfindung ist vorgesehen, dass das Gehäuse eine weitere Isolationsfolie umfasst, welche auf die auf das Grundgehäuse aufgeklebte Isolationsfolie aufgeklebt ist.

Im Rahmen einer weiteren Ausführungsform weist die weitere Isolationsfolie ein Schichtsystem aus mindestens einer Basisschicht und mindestens einer Klebstoffschicht auf. Die weitere Isolationsfolie kann vorteilhafterweise ebenfalls mit einer Klebstoffschicht auf die auf das Grundgehäuse aufgeklebte Isolationsfolie aufgeklebt sein. Auch die Basisschicht der weiteren Isolationsfolie ist vorzugsweise aus einem Kunststoff ausgebildet. Beispielsweise kann die Basisschicht der weiteren Isolationsfolie eine Schichtdicke von ≥ 10 µm, insbesondere von ≥ 12 µm, zum Beispiel von ≥ 10 µm bis ≤ 70 µm, beispielsweise von ≥ 19 µm bis ≤ 25 µm, aufweisen.

Im Rahmen einer weiteren Ausführungsform umfasst die weitere Isolationsfolie mindestens eine Basisschicht aus einem Polymer, welches ausgewählt ist, aus der Gruppe bestehend aus Polyestern, Silikonen, Polyolefinen, Polyhalogenolefinen, Polystyrolen, Polyimiden und Kombinationen davon. Insbesondere kann die mindestens eine Basisschicht der weiteren Isolationsfolie aus einem derartigen Polymer ausgebildet sein. Die mindestens eine Basisschicht beziehungsweise das Polymer der weiteren Isolationsfolie kann beispielsweise mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Zum Beispiel kann die mindestens eine Basisschicht der weiteren Isolationsfolie eine Thermosilikonfolie, beispielsweise eine von der Firma Kunze, Deutschland, unter dem Markennamen HEATPAD® vertriebene Thermosilikonfolie, sein.

Vorzugsweise umfasst die weitere Isolationsfolie mindestens eine Klebstoffschicht aus einem Haftklebstoff. Die mindestens eine Klebstoffschicht der weiteren Isolationsfolie kann beispielsweise eine Schichtdicke von ≥ 10 µm, insbesondere von ≥ 20 µm, zum Beispiel von ≥ 25 µm bis ≤ 35 µm, aufweisen.

Im Rahmen einer weiteren Ausführungsform umfasst die weitere Isolationsfolie mindestens eine Klebstoffschicht aus einem Klebstoff, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Insbesondere kann die mindestens eine Klebstoffschicht der weiteren Isolationsfolie aus einem derartigen Klebstoff ausgebildet sein. Die mindestens eine Klebstoffschicht der weiteren Isolationsfolie kann beispielsweise mindestens ein Additiv umfassen, welches ausgewählt ist aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon.

Die weitere Isolationsfolie kann beispielsweise eine derartige Basisschicht aufweisen. Beispielsweise können sowohl die auf das Grundgehäuse aufgeklebte Isolationsfolie als auch die weitere Isolationsfolie ein Schichtsystem aus einer Basisschicht und einer Klebstoffschicht aufweisen. Dabei können die Klebstoffschichten und Basisschichten sowohl gleich als auch unterschiedlich sein. Zum Beispiel kann die auf das Grundgehäuse aufgeklebte Isolationsfolie ein Schichtsystem aus einer Basisschicht aus einem, gegebenenfalls ein Additiv zur Erhöhung der thermischen Leitfähigkeit umfassenden, Silikon und/oder Polyolefin, beispielsweise eine Thermosilikonfolie, zum Beispiel eine von der Firma Kunze, Deutschland, unter dem Markennamen HEATPAD® vertriebene Thermosilikonfolie, und einer Klebstoffschicht umfassen, welches mit der Klebstoffschicht auf das Grundgehäuse aufgeklebt ist, wobei auf die auf das Grundgehäuse aufgeklebte Isolationsfolie, insbesondere auf deren Basisschicht, wiederum eine weitere Isolationsfolie mit einem Schichtsystem aus einer Polyesterbasisschicht und einer Klebstoffschicht, insbesondere mit der Klebstoffschicht aufgeklebt ist, oder umgekehrt.

Es ist auch möglich, dass die weitere Isolationsfolie ein Schichtsystem aus mindestens zwei Basisschichten und mindestens einer Klebstoffschicht, beispielsweise aus mindestens zwei Basisschichten und mindestens zwei Klebstoffschichten, insbesondere in alternierender Anordnung, aufweist. Die Basisschichten und/oder Klebstoffschichten der weiteren Isolationsfolie können dabei ebenfalls sowohl gleich als auch unterschiedlich ausgestaltet sein.

Zum Beispiel kann die weitere Isolationsfolie eine erste und eine zweite, von der ersten unterschiedliche Basisschicht umfassen. Dabei kann die erste Basisschicht ein erstes Polymer umfassen oder daraus ausgebildet sein und die zweite Basisschicht ein zweites, vom ersten unterschiedliches Polymer umfassen oder daraus ausgebildet sein. Insbesondere kann dabei die erste Basisschicht ein erstes Polymer umfassen oder daraus ausgebildet sein, welches ausgewählt ist aus der Gruppe, bestehend aus Polyestern, Silikonen, Polyolefinen, Polyhalogenolefinen, Polystyrolen, Polyimiden und Kombinationen davon. Die zweite Basisschicht kann dabei insbesondere ein zweites, vom ersten unterschiedliches Polymer umfassen oder daraus ausgebildet sein, welches ebenfalls ausgewählt ist aus der Gruppe bestehend aus Polyestern, Silikonen, Polyolefinen, Polyhalogenolefinen, Polystyrolen, Polyimiden und Kombinationen davon. Zum Beispiel können die erste und zweite Basisschicht beziehungsweise das erste und zweite Polymer der weiteren Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Basisschicht beziehungsweise das erste und zweite Polymer sich dadurch unterscheiden, dass diese additiviert, nicht additiviert oder unterschiedlich additiviert sind.

Alternativ oder zusätzlich dazu kann die weitere Isolationsfolie mindestens eine erste und eine zweite, von der ersten unterschiedliche Klebstoffschicht umfassen. Dabei kann die erste Klebstoffschicht einen ersten Klebstoff umfassen oder daraus ausgebildet sein und die zweite Klebstoffschicht einen zweiten, vom ersten unterschiedlichen Klebstoff umfassen oder daraus ausgebildet sein. Insbesondere kann dabei die erste Klebstoffschicht einen ersten Klebstoff umfassen oder daraus ausgebildet sein, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Die zweite Klebstoffschicht kann dabei insbesondere einen zweiten, vom ersten unterschiedlichen Klebstoff umfassen oder daraus ausgebildet sein, welcher ebenfalls ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon. Zum Beispiel können die erste und zweite Klebstoffschicht beziehungsweise der erste und zweite Klebstoff der weiteren Isolationsfolie unterschiedliche Additive, insbesondere zur Verbesserung der thermischen Leitfähigkeit, umfassen. Diese können beispielsweise ausgewählt sein aus der Gruppe bestehend aus Bornitrid, Aluminiumoxid, Aluminiumnitrid, Glasfasern, insbesondere Bornitrid, Aluminiumoxid, Aluminiumnitrid, und Mischungen davon. Alternativ oder zusätzlich dazu können die erste und zweite Klebstoffschicht beziehungsweise der erste und zweite Klebstoff sich dadurch unterscheiden, dass diese additiviert, nicht additiviert oder unterschiedlich additiviert sind.

Vorzugsweise ist die weitere Isolationsfolie mindestens auf die äußeren Seitenflächen und die äußere Bodenfläche der auf das Grundgehäuse aufgeklebten Isolationsfolie aufgeklebt. Insbesondere kann die weitere Isolationsfolie derart auf die äußeren Seitenflächen und die äußere Bodenfläche der auf das Grundgehäuse aufgeklebten Isolationsfolie aufgeklebt sein, dass die weitere Isolationsfolie diese Flächen teilweise oder vollständig, insbesondere vollständig, bedeckt.

Vorzugsweise ist die weitere Isolationsfolie derart auf die äußeren Seitenflächen und die äußere Bodenfläche der auf das Grundgehäuse aufgeklebten Isolationsfolie aufgeklebt, dass die Abschnitte der weiteren Isolationsfolie miteinander nicht oder nur geringfügig, das heißt wie zur Isolation notwendig, überlappen.

Vorzugsweise ist die weitere Isolationsfolie in einer Form strukturiert, welche zumindest einer Auffaltung der planaren Bereiche der äußeren Seitenflächen und der äußeren Bodenfläche des Isolationsfolien beklebten Grundgehäuses (in einer Ebene), insbesondere ähnlich einem unvollständigen geometrischen Netz des Isolationsfolien beklebten Grundgehäuses, entspricht. Insbesondere kann die weitere Isolationsfolie in einer Form strukturiert sein, welche zumindest einer Auffaltung der planaren Bereiche der äußeren Seitenflächen und der äußeren Bodenfläche des Isolationsfolien beklebten Grundgehäuses sowie der dazwischen liegenden gewölbten Außenflächen (in einer Ebene) entspricht.

Weiterhin kann die Form der weiteren Isolationsfolie eine Auffaltung zumindest eines Teilbereiches der äußeren Deckfläche des Isolationsfolien - beklebten Grundgehäuses umfassen. In diesem Abschnitt kann die weitere Isolationsfolie zusätzlich, beispielsweise für die Pole des galvanischen Elements, ausgespart sein.

Vorzugsweise überlappen die Abschnitte der weiteren Isolationsfolie miteinander nicht oder nur geringfügig.

Insbesondere können die auf das Grundgehäuse aufgeklebte Isolationsfolie und die weitere Isolationsfolie in unterschiedlichen Formen strukturiert sein, welche jeweils unterschiedlichen Auffaltungen entsprechen.

Die auf das Grundgehäuse aufgeklebte Isolationsfolie und die weitere Isolationsfolie können insbesondere eine Wärmeleitfähigkeit von ≥ 0,10 W/(mK), beispielsweise von ≥ 0,15 W/(mK), und/oder eine Durchschlagsfestigkeit von ≥ 2 kV aufweisen.

Hinsichtlich Vorteilen, Definitionen und weiteren Merkmalen wird hiermit explizit auf die Erläuterungen im Zusammenhang mit dem erfindungsgemäßen Verfahren, galvanischen Element, Modul und Pack sowie mit der Figurenbeschreibung verwiesen.

Ein weiterer Gegenstand der vorliegenden Erfindung ist ein galvanisches Element, insbesondere eine Lithium-Ionen-Zelle, welche ein erfindungsgemäßes Gehäuse umfasst und/oder durch ein erfindungsgemäßes Verfahren hergestellt ist. Darüber hinaus betrifft die Erfindung ein galvanisches Modul, insbesondere ein Lithium-Ionen-Modul, welches zwei oder mehr erfindungsgemäße galvanische Elemente umfasst; und ein galvanisches Pack, insbesondere ein Lithium-Ionen-Pack, welches zwei oder mehr erfindungsgemäße galvanische Module umfasst.

Hinsichtlich weiterer Merkmale und Vorteile des erfindungsgemäßen galvanischen Elements, Moduls und Packs wird hiermit explizit auf die Erläuterungen im Zusammenhang mit dem erfindungsgemäßen Verfahren und Gehäuse sowie mit der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen stark vergrößerten, schematischen Querschnitt durch eine erste Ausführungsform eines Gehäuses;
- Fig. 2: einen schematischen Querschnitt durch eine erste Ausführungsform eines galvanischen Elements mit einem Gehäuse;
- Fig. 3a: eine schematische, perspektivische Ansicht einer zweiten Ausführungsform eines galvanischen Elements mit einem Gehäuse;
- Fig. 3b: eine schematische Draufsicht auf eine erste Ausführungsform einer Isolationsfolie für ein Gehäuse;
- Fig. 3c: eine schematische Draufsicht auf eine zweite Ausführungsform einer Isolationsfolie für ein Gehäuse; und
- Fig. 4: eine schematische Draufsicht auf eine dritte Ausführungsform einer Isolationsfolie für ein Gehäuse.

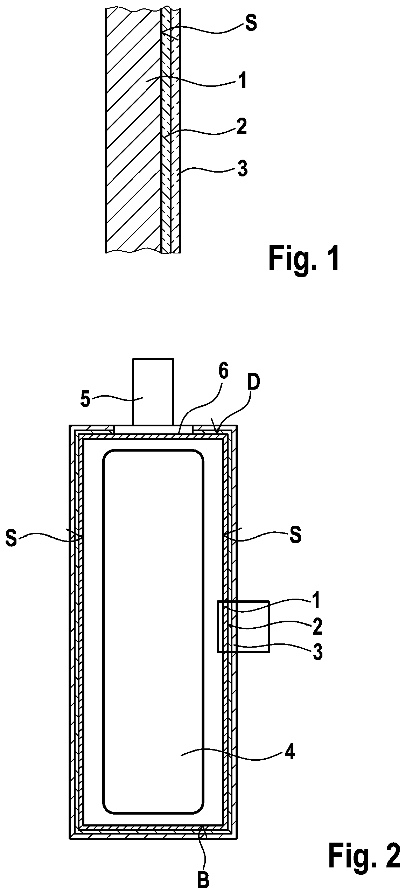

Figur 1 zeigt, dass das Gehäuse im Rahmen dieser Ausführungsform ein metallisches Grundgehäuse 1 und eine auf das Grundgehäuse 1 aufgeklebte Isolationsfolie 2,3 umfasst. Figur 1 veranschaulicht ferner, dass die Isolationsfolie 2,3 ein Schichtsystem aus einer Basisschicht 3 und einer Klebstoffschicht 2 aufweist und über die Klebstoffschicht 2 auf die äußere Seitenfläche S des Grundgehäuses aufgeklebt ist.

Figur 2 zeigt eine erste Ausführungsform eines erfindungsgemäßen galvanischen Elements mit einem erfindungsgemäßen Gehäuse, welches ein prismatisches Grundgehäuse 1, eine Isolationsfolie 2,3 aus einer Klebeschicht 2 und einer Basisschicht 3 und eine Deckplatte 6 umfasst. Figur 2 illustriert, dass im Rahmen dieser Ausführungsform die Isolationsfolie 2,3 auf die äußeren Seitenflächen S und die äußere Bodenfläche B des Grundgehäuses 1 und einen Teilbereich der äußeren Deckfläche D der Deckplatte 6 aufgeklebt ist. Figur 2 zeigt weiterhin, dass in dem Gehäuse elektrochemische Bauelemente 4 angeordnet sind, welche über einen Pol 5 von außerhalb des Gehäuses elektrisch kontaktierbar sind. Figur 2 veranschaulicht ferner, dass die Isolationsfolie 2,3 im Bereich des Pols 5 der äußeren Deckfläche D eine Aussparung aufweist.

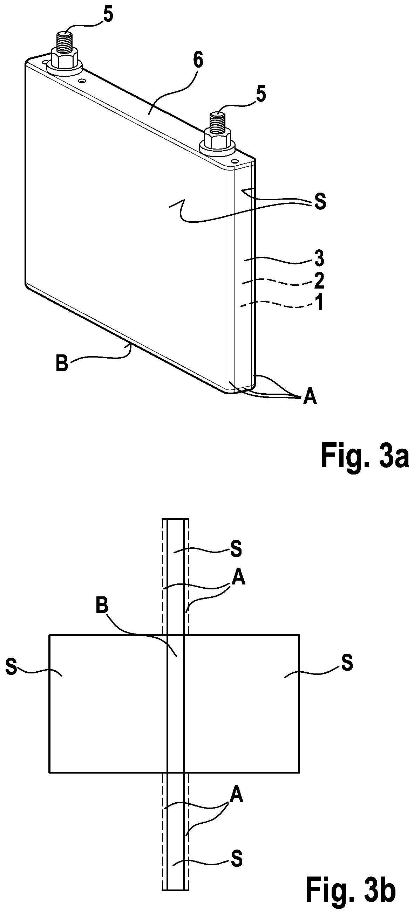

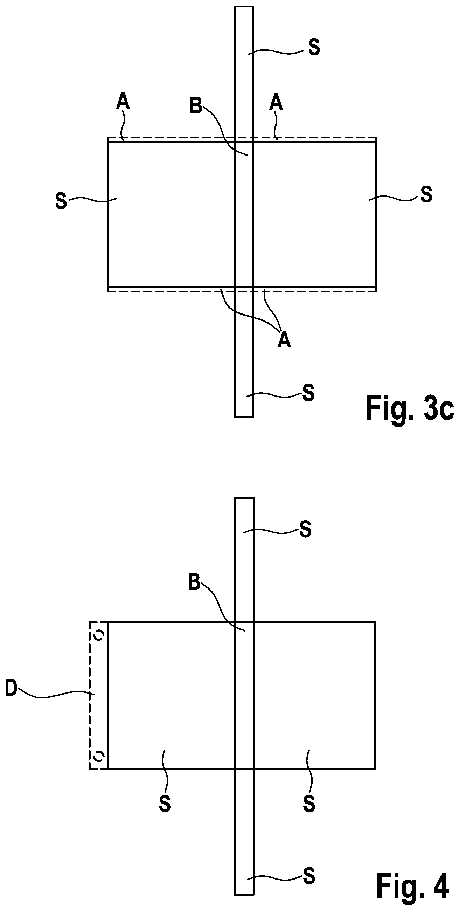

Figur 3a zeigt eine zweite Ausführungsform eines erfindungsgemäßen galvanischen Elements. Im Gegensatz zu der in Figur 2 gezeigten zweiten Ausführungsform ist die die Isolationsfolie 2,3 im Rahmen dieser Ausführungsform nur auf die äußeren Seitenflächen S und die äußere Bodenfläche B des Grundgehäuses 1 aufgeklebt. Die äußere Deckfläche D der Deckplatte 6 liegt im Rahmen dieser Ausführungsform offen. Figur 3 veranschaulicht weiterhin, dass zwischen planaren Bereichen der äußeren Seitenflächen S und der äußeren Bodenfläche B (verdeckt) des Grundgehäuses gewölbte Außenflächen A des Grundgehäuses 1 liegen. Diese können beispielsweise beim Tiefziehen oder Fließpressen des Grundgehäuses 1 entstehen.

Die Figuren 3b und 3c zeigen schematische Draufsichten auf eine erste und zweite Ausführungsform einer Isolationsfolie 2,3 mit der auch die in Figur 3a gezeigten, gewölbten Außenflächen A des Grundgehäuses 1 beklebt werden können. Die Figuren 3b und 3c veranschaulichen, dass die Isolationsfolie 2,3 in einer Form strukturiert ist, welche einer Auffaltung der planaren Bereiche der äußeren Seitenflächen S und der äußeren Bodenfläche B des Grundgehäuses 1 sowie der dazwischen liegenden gewölbten Außenflächen A des Grundgehäuses 1 in einer Ebene, ähnlich einem unvollständigen geometrischen Netz, entspricht. Die so strukturierten Isolationsfolien können derart auf die äußeren Seitenflächen S, äußere Bodenfläche B und dazwischen liegenden Außenflächen A des Grundgehäuses 1 aufgeklebt werden, dass die Isolationsfolie 2,3 diese vollständig bedeckt, wobei die einzelnen Abschnitte der Isolationsfolie 2,3 einander nicht oder nur geringfügig, das heißt wie zur Isolation notwendig, überlappen.

Figur 4 zeigt eine schematische Draufsicht auf eine dritte Ausführungsform einer Isolationsfolie 2,3 für ein erfindungsgemäßes Gehäuse, die in einer Form strukturiert ist, welche einer Auffaltung der planaren Bereiche der äußeren Seitenflächen S und der äußeren Bodenfläche B des Grundgehäuses 1 sowie eines Teilbereiches der äußeren Deckfläche D des Grundgehäuses 1 entspricht. Figur 4 illustriert, dass die Isolationsfolie 2,3 im Rahmen dieser Ausführungsform im Abschnitt des Teilbereiches der äußeren Deckfläche D Aussparungen, beispielsweise für die Pole 5 des galvanischen Elements, aufweisen kann. Beispielsweise kann im Rahmen dieser Ausführungsform nach dem Verfahrensschritt a) und vor oder während Verfahrensschritt b) das Grundgehäuse 1 mit elektrochemischen Bauteilen 4 bestückt, gegebenenfalls das Grundgehäuse 1 mit einer Deckplatte 6 verschlossen, und anschließend dieser Abschnitt auf beziehungsweise über die Deckfläche D des Grundgehäuses 1 geklebt werden.

Die in den Figuren 3b, 3c und 4 gezeigten, strukturierten Isolationsfolien können auf einer Trägerfolie beziehungsweise einem Trägerfolienband mit einer Vielzahl dieser Strukturen, bereitgestellt werden und in Verfahrensschritt b) von der Trägerfolie beziehungsweise einem Trägerfolienband direkt automatisch auf das Grundgehäuse aufgeklebt werden.

### Referenzbeispiele

### Variante 1:

Eine Isolationsfolie mit einer Polyesterbasisschicht von 23 µm und einer Polysiloxanklebstoffschicht von 35 µm von Firma PPI (Irland), wurde auf einer Trägerfolie von 50 µm entsprechend der Form eines tiefgezogenen Aluminiumgrundgehäuse mit einem Skalpell eingeschnitten, von der Trägerfolie abgelöst und um das Gehäuse konfektioniert. Danach wurde die Isolationsfolie flächig angepresst. Anschließend wurden Schliffbilder angefertigt.

Die Polyesterbasisschicht wies unverändert eine Schichtdicke von 23 µm auf. Wohingegen sich die Schichtdicke der Polysiloxanklebstoffschicht von 35 µm auf 30 µm verringerte. Schälversuche zeigen, dass das Klebeband ausreichend haftend ist. Nach einem Monat Tropenfeuchtelagerung bei 60 °C und 90 % Luftfeuchte wurden identische Haftresultate zum Ausgangszustand erzielt. Erste analytische Berechnungen der effektiven Wärmeableitung der Zelle zeigten, dass der Wärmeleitfähigkeit der Isolationsfolie aufgrund der geringen Schichtdicke kaum Auswirkungen auf die Gesamtwärmeableitung der Zelle hat.

### Variante 2:

Eine Isolationsfolie mit einer Polyesterbasisschicht von 50 µm und einer Polysiloxanklebstoffschicht von 35 µm von Firma PPI (Irland), wurde auf einer Trägerfolie von 50 µm entsprechend der Form eines tiefgezogenen Aluminiumgrundgehäuse mit einem Skalpell eingeschnitten, von der Trägerfolie abgelöst und um das Gehäuse konfektioniert. Danach wurde die Isolationsfolie flächig angepresst. Anschließend wurden Schliffbilder angefertigt.

Die Polyesterbasisschicht wies unverändert eine Schichtdicke von 50 µm auf. Wohingegen sich die Schichtdicke der Polysiloxanklebstoffschicht von 35 µm auf 30 µm verringerte. Schälversuche zeigen, dass das Klebeband ausreichend haftend ist. Nach einem Monat Tropenfeuchtelagerung bei 60 °C und 90 % Luftfeuchte wurden identische Haftresultate zum Ausgangszustand erzielt. Erste analytische Berechnungen der effektiven Wärmeableitung der Zelle zeigten, dass der Wärmeleitfähigkeit der Isolationsfolie aufgrund der geringen Schichtdicke kaum Auswirkungen auf die Gesamtwärmeableitung der Zelle hat.

## Patentansprüche

1. Verfahren zur Herstellung eines Gehäuses für ein galvanisches Element, umfassend die Verfahrensschritte
a) Formen eines metallischen Grundgehäuses (1),
b) Aufkleben einer Isolationsfolie (2,3) auf mindestens eine Außenfläche (S,B) des Grundgehäuses (1), und
c) Aufkleben einer weiteren Isolationsfolie auf die zuvor aufgeklebte Isolationsfolie,
wobei die in Verfahrensschritt b) oder c) eingesetzte Isolationsfolie (2,3) ein Schichtsystem aus mindestens einer Basisschicht (3) und mindestens einer Klebstoffschicht (2) aufweist,
**dadurch gekennzeichnet, dass** die mindestens eine Basisschicht (3) und/oder die mindestens eine Klebstoffschicht (2) mindestens ein zur Erhöhung der thermischen Leitfähigkeit ausgebildetes Additiv aufweist.

2. Verfahren nach Anspruch 1, **dadurch gekennzeichnet, dass** die in Verfahrensschritt b) oder c) eingesetzte Isolationsfolie mindestens eine Basisschicht (3) aus einem Polymer umfasst, welches ausgewählt ist aus der Gruppe bestehend aus Polyestern, Silikonen, Polyolefinen, Polyhalogenolefinen, Polystyrolen, Polyimiden und Kombinationen davon.

3. Verfahren nach einem der Ansprüche 1 und 2, **dadurch gekennzeichnet, dass** die in Verfahrensschritt b) oder c) eingesetzte Isolationsfolie mindestens eine Klebstoffschicht (2) aus einem Klebstoff umfasst, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon.

4. Verfahren nach einem der Ansprüche 1 bis 3, **dadurch gekennzeichnet, dass** in Verfahrensschritt b) die Isolationsfolie (2,3) mindestens auf die äußeren Seitenflächen (S) und die äußere Bodenfläche (B) des Grundgehäuses (1) aufgeklebt wird.

5. Verfahren nach einem der Ansprüche 1 bis 4, **dadurch gekennzeichnet, dass** die in Verfahrensschritt b) eingesetzte Isolationsfolie (2,3) in einer Form strukturiert ist, welche zumindest einer Auffaltung der planaren Bereiche der äußeren Seitenflächen (S) und der äußeren Bodenfläche (B) des Grundgehäuses (1) entspricht.

6. Verfahren nach einem der Ansprüche 1 bis 5, **dadurch gekennzeichnet, dass** in Verfahrensschritt b) oder c) die Isolationsfolie (2,3) von einer Trägerfolie, aufgeklebt wird.

7. Gehäuse für ein galvanisches Element, umfassend
- ein metallisches Grundgehäuse (1) mit einer Wandstärke von ≥ 100 µm,
- eine auf mindestens eine Außenfläche (S,B) des Grundgehäuses (1) aufgeklebte Isolationsfolie (2,3) und
- eine weitere Isolationsfolie, welche auf die auf das Grundgehäuse (1) aufgeklebte Isolationsfolie (2,3) aufgeklebt ist, wobei die auf das Grundgehäuse (1) aufgeklebte Isolationsfolie (2,3) oder die weitere Isolationsfolie ein Schichtsystem aus mindestens einer Basisschicht (3) und mindestens einer Klebstoffschicht (2) aufweist, **dadurch gekennzeichnet, dass** die mindestens eine Basisschicht (3) und/oder die mindestens eine Klebstoffschicht (2) mindestens ein zur Erhöhung der thermischen Leitfähigkeit ausgebildetes Additiv aufweist.

8. Gehäuse nach Anspruch 7, **dadurch gekennzeichnet, dass** die auf das Grundgehäuse (1) aufgeklebte Isolationsfolie (2,3) oder die weitere Isolationsfolie mindestens eine Basisschicht (3) aus einem Polymer umfasst, welches ausgewählt ist, aus der Gruppe bestehend aus Polyestern, Silikonen, Polyolefinen, Polyhalogenolefinen, Polystyrolen, Polyimiden und Kombinationen davon.

9. Gehäuse nach einem der Ansprüche 7 und 8, **dadurch gekennzeichnet, dass** die auf das Grundgehäuse (1) aufgeklebte Isolationsfolie (2,3) oder die weitere Isolationsfolie mindestens eine Klebstoffschicht (2) aus einem Klebstoff umfasst, welcher ausgewählt ist aus der Gruppe bestehend aus polysiloxanbasierten Klebstoffen, acrylatbasierten Klebstoffen, kautschukbasierten Klebstoffen, polyurethanbasierten Klebstoffen, epoxidharzbasierten Klebstoffen und Kombinationen davon.

10. Gehäuse nach einem der Ansprüche 7 bis 9, **dadurch gekennzeichnet, dass** die auf das Grundgehäuse (1) aufgeklebte Isolationsfolie (2,3) in einer Form strukturiert ist, welche zumindest einer Auffaltung der planaren Bereiche der äußeren Seitenflächen (S) und der äußeren Bodenfläche (B) des Grundgehäuses (1) entspricht.

11. Galvanisches Element, umfassend ein Gehäuse nach einem der Ansprüche 7 bis 10 und/oder hergestellt durch ein Verfahren nach einem der Ansprüche 1 bis 6.

## Claims

1. Process for the production of a housing for an electrochemical element, comprising the following steps:
a) molding of a metallic housing structure (1),
b) applying an insulation foil (2, 3) by adhesive bonding to at least one external area (S, B) of the housing structure (1), and
c) applying another insulation foil by adhesive bonding to the insulation foil previously applied by adhesive bonding,
wherein the insulation foil (2, 3) used in step b) or c) comprises a layer system made of at least one base layer (3) and of at least one adhesive layer (2),
**characterized in that** the at least one base layer (3) and/or the at least one adhesive layer (2) comprises at least one additive configured to increase thermal conductivity.

2. Process according to Claim 1, **characterized in that** the insulation foil used in step b) or c) comprises at least one base layer (3) made of a polymer selected from the group consisting of polyesters, silicones, polyolefins, polyhalo-olefins, polystyrenes, polyimides, and combinations thereof.

3. Process according to either of Claims 1 and 2, **characterized in that** the insulation foil used in step b) or c) comprises at least one adhesive layer (2) made of an adhesive selected from the group consisting of polysiloxane-based adhesives, acrylate-based adhesives, rubber-based adhesives, polyurethane-based adhesives, epoxy-resin-based adhesives, and combinations thereof.

4. Process according to any of Claims 1 to 3, **characterized in that** in step b) adhesive bonding is used to apply the insulation foil (2, 3) at least to the exterior sides (S) and the exterior base (B) of the housing structure (1).

5. Process according to any of Claims 1 to 4, **characterized in that** a shape of the insulation foil (2, 3) used in step b) corresponds at least to a flattened version of the planar regions of the exterior sides (S) and of the exterior base (B) of the housing structure (1).

6. Process according to any of Claims 1 to 5, **characterized in that** in step b) or c) adhesive bonding is used to apply the insulation foil (2, 3) from a backing foil.

7. Housing for an electrochemical element, comprising
- a metallic housing structure (1) with a wall thickness ≥ 100 µm,
- an insulation foil (2, 3) applied by adhesive bonding to at least one external area (S, B) of the housing structure (1),
and
- another insulation foil applied by adhesive bonding to the insulation foil (2, 3) applied by adhesive bonding to the housing structure (1), where the insulation foil (2, 3) applied by adhesive bonding to the housing structure (1) comprises, or the other insulation foil comprises, a layer system made of at least one base layer (3) and at least one adhesive layer (2),
**characterized in that** the at least one base layer (3) and/or the at least one adhesive layer (2) comprises at least one additive configured to increase thermal conductivity.

8. Housing according to Claim 7, **characterized in that** the insulation foil (2, 3) applied by adhesive bonding to the housing structure (1) comprises, or the other insulation foil comprises, at least one base layer (3) made of a polymer selected from the group consisting of polyesters, silicones, polyolefins, polyhalo-olefins, polystyrenes, polyimides, and combinations thereof.

9. Housing according to either of Claims 7 and 8, **characterized in that** the insulation foil (2, 3) applied by adhesive bonding to the housing structure (1) comprises, or the other insulation foil comprises, at least one adhesive layer (2) made of an adhesive selected from the group consisting of polysiloxane-based adhesives, acrylate-based adhesives, rubber-based adhesives, polyurethane-based adhesives, epoxy-resin-based adhesives, and combinations thereof.

10. Housing according to any of Claims 7 to 9, **characterized in that** the shape of the insulation foil (2, 3) applied by adhesive bonding to the housing structure (1) corresponds at least to a flattened version of the planar regions of the exterior sides (S) and of the exterior base (B) of the housing structure (1) .

11. Electrochemical element comprising a housing according to any of Claims 7 to 10 and/or produced via a process according to any of Claims 1 to 6.

## Revendications

1. Procédé de fabrication d'une enceinte pour un élément galvanique, comprenant les étapes suivantes
a) mouler une enceinte métallique de base (1),
b) coller un film d'isolation (2,3) sur au moins une surface extérieure (S, B) de l'enceinte de base (1), et
c) coller un autre film d'isolation sur le film d'isolation précédemment collé,
dans lequel le film d'isolation (2,3) utilisé lors de l'étape de procédé b) ou c) comprend un système de couches constitué d'au moins une couche de base (3) et d'au moins une couche d'adhésif (2),
**caractérisé en ce que** ladite au moins une couche de base (3) et/ou ladite au moins une couche d'adhésif (2) comprend au moins un additif destiné à augmenter la conductivité thermique.

2. Procédé selon la revendication 1, **caractérisé en ce que** le film d'isolation utilisé lors de l'étape de procédé b) ou c) comprend au moins une couche de base (3) constituée d'un polymère choisi dans le groupe constitué de polyesters, de silicones, de polyoléfines, de polyhalogéno-oléfines, de polystyrènes, de polyimides et de combinaisons de ceux-ci.

3. Procédé selon l'une des revendications 1 et 2, **caractérisé en ce que** le film d'isolation utilisé lors de l'étape de procédé b) ou c) comprend au moins une couche d'adhésif (2) constituée d'un adhésif choisi dans le groupe constitué d'adhésifs à base de polysiloxane, d'adhésifs à base d'acrylate, d'adhésifs à base de caoutchouc, d'adhésifs à base de polyuréthane, d'adhésifs à base de résine époxy et de combinaisons de ceux-ci.

4. Procédé selon l'une des revendications 1 à 3, **caractérisé en ce que**, lors de l'étape de procédé b), le film d'isolation (2,3) est collé au moins sur les surfaces latérales extérieures (S) et la surface de fond extérieure (B) de l'enceinte de base (1).

5. Procédé selon l'une des revendications 1 à 4, **caractérisé en ce que** le film d'isolation (2,3) utilisé lors de l'étape de procédé b) est structuré sous une forme qui correspond au moins à un pliage des zones planes des surfaces latérales extérieures (S) et de la surface de fond extérieure (B) de l'enceinte de base (1).

6. Procédé selon l'une des revendications 1 à 5, **caractérisé en ce que**, lors de l'étape de procédé b) ou c), le film d'isolation (2,3) est collé à partir d'un film de support.

7. Enceinte pour un élément galvanique, comprenant
- une enceinte de base métallique (1) ayant une épaisseur de paroi de ≥ 100 µm,
- un film d'isolation (2,3) collé sur au moins une surface extérieure (S,B) de l'enceinte de base (1) et
- un autre film d'isolation, qui est collé sur le film d'isolation (2,3) collé sur l'enceinte de base (1), dans lequel le film d'isolation (2,3) collé sur l'enceinte de base (1) ou l'autre film d'isolation présente un système de couches comprenant au moins une couche de base (3) et au moins une couche d'adhésif (2), **caractérisé en ce que** ladite au moins une couche de base (3) et/ou ladite au moins une couche d'adhésif (2) comprend au moins un additif conçu pour augmenter la conductivité thermique.

8. Enceinte selon la revendication 7, **caractérisée en ce que** le film d'isolation (2,3) collé sur l'enceinte de base (1) ou l'autre film d'isolation comprend au moins une couche de base (3) constituée d'un polymère choisi dans le groupe constitué de polyesters, de silicones, de polyoléfines, de polyhalogéno-oléfines, de polystyrènes, de polyimides et de combinaisons de ceux-ci.

9. Enceinte selon l'une des revendications 7 et 8, **caractérisée en ce que** le film d'isolation (2,3) collé sur l'enceinte de base (1) ou l'autre film d'isolation comprend au moins une couche d'adhésif (2) constituée d'un adhésif choisi dans le groupe constitué d'adhésifs à base de polysiloxane, d'adhésifs à base d'acrylate, d'adhésifs à base de caoutchouc, d'adhésifs à base de polyuréthane, d'adhésifs à base de résine époxy et de combinaisons de ceux-ci.

10. Enceinte selon l'une des revendications 7 à 9, **caractérisée en ce que** le film d'isolation (2,3) collé sur l'enceinte de base (1) est structuré sous une forme qui correspond au moins à un pliage des zones planes des surfaces latérales extérieures (S) et de la surface de fond extérieure (B) de l'enceinte de base (1).

11. Élément galvanique comprenant une enceinte selon l'une des revendications 7 à 10 et/ou produit par un procédé selon l'une des revendications 1 à 6.
